(19) Europäisches Patentamt
European Patent Office
Office européen des brevets

(11) **EP 4 343 283 A1**

(12) **EUROPEAN PATENT APPLICATION**
published in accordance with Art. 153(4) EPC

(43) Date of publication:
**27.03.2024 Bulletin 2024/13**

(21) Application number: **21940963.8**

(22) Date of filing: **08.11.2021**

(51) International Patent Classification (IPC):
***G01C 21/16*** (2006.01)   ***G01C 23/00*** (2006.01)
***G01S 19/52*** (2010.01)

(86) International application number:
**PCT/RU2021/000489**

(87) International publication number:
**WO 2022/245246 (24.11.2022 Gazette 2022/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.05.2021 RU 2021113915**

(71) Applicant: **Obshchestvo s Ogranichennoi
Otvetstvennostiu
"Evokargo"
Moscow, 129085 (RU)**

(72) Inventors:
• **KIBALOV, Vladislav Igorevich
  Moscow, 119361 (RU)**
• **KABAKOV, Anatolii Evgenevich
  Moscow, 115516 (RU)**
• **SHIPITKO, Oleg Sergeevich
  Moskva, 108811 (RU)**

(74) Representative: **Klemm, Rolf
  Patentfactory Pantentanwaltskanzlei Klemm
  Franz-Reber-Weg 6
  81479 München (DE)**

(54) **METHOD OF INTEGRATING NAVIGATIONAL DATA TO DETERMINE THE POSITION OF A VEHICLE**

(57)   The invention relates to the field of navigation, namely to methods of positioning autonomous ground vehicles (AGV), including mobile robots.

A method of integrating navigational data to determine the position of a vehicle includes the following stages: data about the speed of the vehicle is obtained from the encoders installed on the wheels of the vehicle, and now the receiver, the data about the angle of rotation of the vehicle around the vertical axis is obtained from the encoder mounted on the steering rack of the vehicle, and inertial navigation systems, convert the data received from these on-board sensors in appropriate units of speed and angle of rotation, determine the speed of the vehicle as the sum of the velocity values obtained according to the testimony of wheel encoders and now the receiver with a weighting coefficient, designed to regulate the degree of influence the testimony of these onboard sensors to estimate the speed of the vehicle, then determine the estimated angle of rotation of the vehicle around the vertical axis by the angle of the steering rack based on the value of the vehicle speed, defined based on the testimony of wheel encoders and now the receiver, determine the relative rotations of the vehicle around the vertical axis according to the testimony of inertial navigation system and encoder steering rack as the difference between the previous and current readings corresponding onboard sensors determine the angle of rotation of the vehicle around the vertical axis as the sum of the values of relative rotations on the testimony of the encoder steering rack and inertial navigation systems, considering the weighting factor used to control the degree of influence the testimony of these onboard sensors to estimate the rotation angle of the vehicle, the data about the angle of rotation of the vehicle around the vertical axis and the speed of the vehicle are combined using a kinematic model of the vehicle, causing define the position and course of a vehicle.

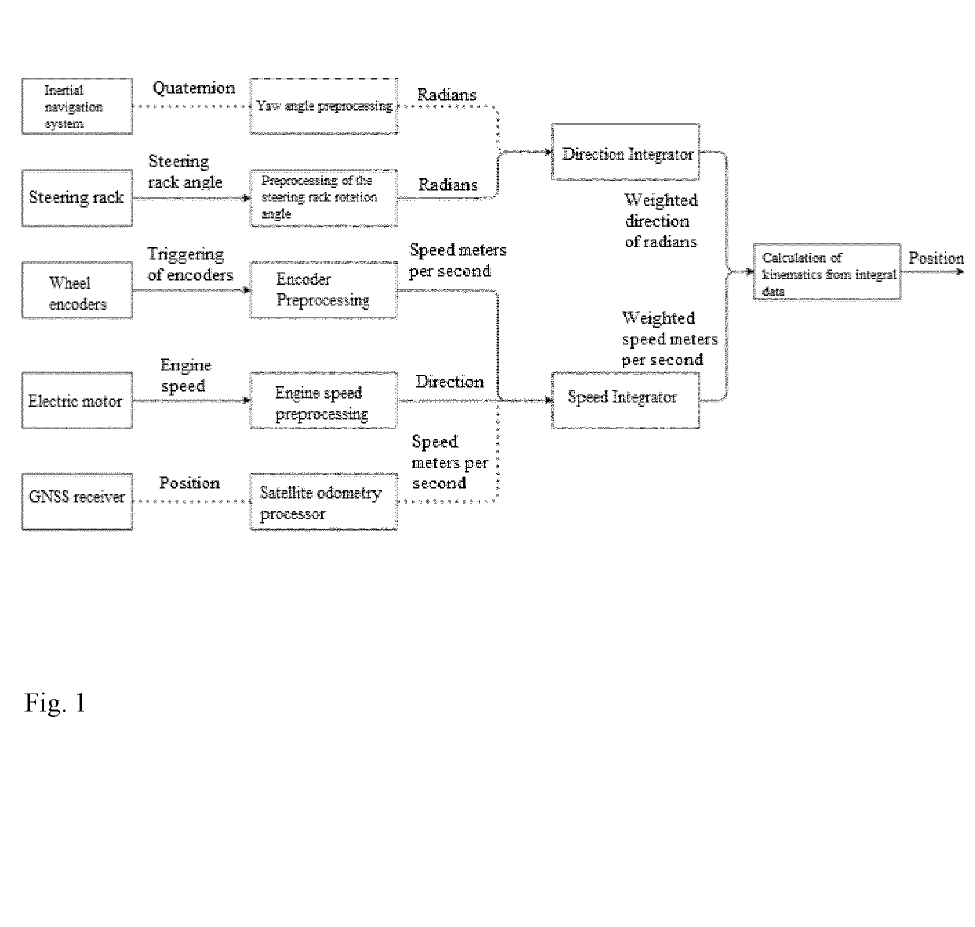

EP 4 343 283 A1

Fig. 1

**Description**

The invention relates to the field of navigation, namely to methods of positioning autonomous ground vehicles (AGV), including mobile robots.

At present, AGV, including robotic systems, are increasingly find expanding applications to perform various kinds of operations in production and warehouse premises to automate technological processes in various industries, as well as in hazardous industries where the presence of a person is undesirable or unacceptable.

The main requirement for the AGV is the accurate determination of its own position in space, for which autonomous vehicles contain onboard sensors, among which are the navigation satellite system (GPS, GLONASS), odometry, inertial navigation system (INS), including accelerometers, gyroscopes, etc.

Features of AGV operation (environmental conditions) and technical features of on-board sensors determine the measurement errors of the location and angular position of the AGV on the ground, so the satellite signal in the conditions of AGV use in the premises can be received unstable and with interference, odometry has a feature of accumulation of measurement errors affected by external and internal interference, as well as due to slippage wheels and its irregularities, for INS, the main disadvantages are the accumulation of measurement errors during active operation and a decrease in measurement accuracy as a result of a sharp and frequent change in the speed of the object.

Thus, for accurate positioning of the AGV, it is advisable to obtain data on its parameters from several heterogeneous onboard sensors with further integration of the received navigation information, as well as with the possibility of varying the degree of influence of measurements of each onboard sensor on determining the location and angular position of the AGV in accordance with the operating conditions of the AGV and the accuracy of measurements of each onboard sensor in these conditions.

The following technical solutions are known from this state of the art.

A method for determining the spatial position of a vehicle based on GNSS-INS and an inertial navigation system is known (patent RU 2662462). This method includes the following steps: installation of the GNSS antenna in the center of mass and in the center of the vehicle and installation of the IMU sensor measuring unit based on MEMS on the steering shaft of the vehicle; obtaining information about the position and speed of the vehicle using the GNSS antenna, obtaining information about the heading angular velocity of the vehicle using the measuring unit IMU; calculation of the angle of the spatial position of the vehicle using a combination of accelerometer and gyroscope; calculation of the heading angle of the vehicle based on the position, speed and heading angular velocity of the vehicle. By combining a single GNSS antenna and a low-cost IMU/MEMS sensor, the spatial position and direction can be determined based on the kinematic model of the vehicle.

This method is intended for positioning an agricultural vehicle, usually operating in an open area, which limits the ability to determine the location of an object in an enclosed space, where the GNSS signal is received unsteadily and with interference, and the specified inertial sensor set can't determine the coordinates of the object and does not provide sufficient positioning accuracy.

There is a known method of positioning the robot (CN110567458), in which data on the spatial position of the robot is obtained from on-board sensors presented in the form of inertial sensors, GPS positioning sensor, vision sensor, LIDAR sensor, encoders, sensor based on UWB technology.

Then they receive information about the environmental conditions in which the robot operates (room/open environment, lighting, smoothness of the floor surface), and for each on-board sensor, a weight coefficient is determined that characterizes the accuracy of measurements under these conditions, after which the most priority measurement accuracy is selected from the presented on-board sensors by weight coefficients and, in accordance with the selected positioning algorithm (in the preferred variant, the extended Kalman algorithm), the readings from selected priority onboard sensors.

In this method, a set of heterogeneous onboard sensors is used for positioning the robot, characterized by high cost and complexity of output signal processing algorithms, while these sensors collect information about the environment, based on which priority sensors are determined to determine the spatial position of the robot, which increases the computational complexity of the algorithm and, as a result, reduces the speed of its execution.

A method is known for determining the navigational state of a ground vehicle (including an autonomous vehicle) (US2009319186), in which data on the angle of rotation is obtained from an encoder associated with the rotary wheel of the vehicle, information on the longitudinal angular velocities of the wheels is obtained from speed sensors mounted on these wheels of the vehicle, GPS positioning data is obtained from the GPS receiver installed on the vehicle, the yaw rate for the vehicle is determined based on information about the longitudinal angular velocities of the wheels, the angle of rotation and GPS positioning data, the yaw rate is integrated to determine the course of the vehicle.

The set of on-board sensors claimed in this method for obtaining navigation data does not provide high accuracy of positioning of the vehicle, since the data received from the GPS receiver depends on the reception conditions, the location of the receiving antenna in relation to buildings and trees, and in closed rooms it is received unstable and with interference, and the accuracy of measurements of sensors installed on the wheels of the vehicle, the characteristics of the road surface affect.

There is a known method for satellite determination of the vehicle location using a motion and position sensor (WO2019179844), which includes receiving GNSS satellite data, receiving data on the vehicle wheel rotation speed and steering angle from vehicle sensors, as well as GNSS correction data or inertial sensor data, receiving additional data to draw conclusions about the quality and/or accuracy of determining the position of the vehicle supported by the satellite navigation system. Such data can be data on weather, tire pressure, wheel slip level, mobile communication.

The vehicle data obtained at these steps is transmitted to the motion and position sensor, where the spatial position of the vehicle is determined.

In the presented method, additional data on environmental conditions are obtained in the process of determining the location of the vehicle to establish priority on the accuracy of measurements of the onboard sensors used, which complicates the algorithm and reduces the speed of processing navigation information. In addition, the method does not specify how the possibility of an independent assessment of the speed and angular position of the vehicle is realized based on indications from several heterogeneous onboard sensors.

The method disclosed in the source WO2019179844 is the closest in technical essence to the claimed invention and can act as a prototype.

The task to be solved by the claimed invention is to create a method that allows to determine with high accuracy the spatial position of a ground AGV under various operating conditions by combining various navigation data obtained from heterogeneous onboard sensors with the possibility of regulating the degree of influence of each onboard sensor - a source of navigation information - on the assessment of the spatial position in accordance with the operation conditions of the AGV.

The technical result of the claimed invention is to increase the accuracy of determining the position of a ground vehicle in space while ensuring the stability of the positioning of the vehicle in various operating conditions.

The technical result of the claimed invention is achieved by the implementation of the method of integrating navigational data to determine the position of a vehicle obtained from onboard sensors of the vehicle, the positioning of a ground vehicle, characterized in that the data on the speed of the vehicle is obtained from the encoders installed on the wheels of the vehicle, and now the receiver, the data about the angle of rotation of the vehicle around the vertical axis is obtained from the encoder mounted on the steering rack of the vehicle, and inertial navigation systems, convert the data received from these on-Board sensors in appropriate units of speed and angle of rotation, determine the speed of the vehicle as the sum of the velocity values obtained according to the testimony of wheel encoders and now the receiver considering the weighting factor used to control the degree of influence the testimony of these onboard sensors to estimate the speed of the vehicle, then determine the estimated angle of rotation of the vehicle around the vertical axis by the angle of the steering rack based on the value of the vehicle speed, defined based on the testimony of wheel encoders and now the receiver, determine the relative rotations of the vehicle around the vertical axis according to the testimony of inertial navigation system and encoder steering rack as the difference between the previous and current readings corresponding onboard sensors determine the angle of rotation of the vehicle around the vertical axis as the sum of the values of relative rotations on the testimony of the encoder steering rack and inertial navigation systems, considering the weighting factor used to control the degree of influence the testimony of these onboard sensors to estimate the rotation angle of the vehicle, the data about the angle of rotation of the vehicle around the vertical axis and the speed of the vehicle are combined using a kinematic model of the vehicle, causing define the position and course of a vehicle.

In the preferred embodiment of the method, additional indications are obtained about the direction of movement of the vehicle from the rotation encoder placed on the shaft of the vehicle engine.

The implementation of the stages of the proposed method, consisting in obtaining heterogeneous navigation information from heterogeneous on-board AGV sensors, independently determining on its basis the speed of the AGV and its angular position around the vertical axis with the ability to adjust the degree of influence of each source of navigation information on the assessment of the positioning of the AGV in accordance with the operating environment, allows considering the technical features of the operation of on-board sensors in as part of the AGV under various environmental conditions, as a result, the AGV positioning system is adjusted to the specified operating conditions, which leads to an increase in the accuracy of determining the position of the ground vehicle in space while ensuring the stability of the vehicle positioning in various operating conditions.

Figure 1. shows a sequence diagram of the implementation of a method for integrating heterogeneous navigation information for positioning a ground vehicle.

The method is implemented as follows.

The method of combining heterogeneous navigation information for positioning an autonomous ground vehicle (fig. 1) is designed to determine the position accurately in space (on the plane) of a ground vehicle. The position consisting of coordinates and orientation (heading angle) is determined in a relative coordinate system associated with the initial position of the vehicle, which ensures smoothness of the trajectory.

The AGV space position, including wheeled and tracked robots, is determined by combining various navigation data obtained from heterogeneous onboard sensors, while independently assessing the speed of the vehicle and its course.

Vehicle speed data is obtained from encoders mounted on the wheels of the vehicle and from the CNSS receiver.

Since relative encoders are used in the real AGV positioning system, which consider only the difference between measurements, and do not allow determining the direction of movement of the AGV, then additionally a rotation encoder can be located on the shaft of the AGV engine, allowing to determine the rotation frequency and direction of the traction shaft of the engine, and, consequently, to assess the current direction of movement of the AGV.

In the case of using absolute encoders that allow you to evaluate the direction of movement of the AGV, the use of a rotation encoder on the motor shaft is not necessary.

Data on the angle of rotation of the vehicle around the vertical axis is obtained from the encoder mounted on the steering rack of the vehicle and from the inertial navigation system.

Then, the data received from the indicated onboard sensors are converted into the appropriate units of speed and angle of rotation: information about the speed of movement is converted into m / s, information about the angle of rotation is converted into radians, after which the specified data is processed by an exponential filter.

The vehicle speed is defined as the sum of the speed values obtained from the readings of the wheel encoders and the GNSS receiver, considering the weighting factor designed to change the degree of influence of the readings of these on-board sensors on the assessment of the vehicle speed:

$$v_k = v_1 * (1 - w) + v_2 * w,$$

where $v_k$ is the value of the total speed according to the readings of the GNSS receiver and wheel encoders, $v_1$ is the speed value obtained from the readings of the wheel encoders, $v_2$ is the speed value obtained from the readings of the GNSS receiver, $w$ is a weighting factor designed to change the degree of influence of the readings of the GNSS receiver and wheel encoders on the result of the speed value $v_k$.

Then calculate the angle of rotation of the vehicle around the vertical axis by the angle of the steering rack, considering the value of the total speed $v_k$:

$$\gamma_{steer} = \frac{v_k * sin(\delta)}{base} * dt,$$

where *base* is the width of the wheelbase, m.
$\delta$ - steering rack angle, rad.

Determine the relative rotation of the AGV around the vertical Z axis based on the readings of the inertial sensor $\Delta\gamma_{ins}$ and the relative rotation of the AGV around the vertical Z axis based on the readings of the

steering rack encoder $\Delta\gamma_{steer}$ as the difference between the previous and current readings of the corresponding onboard sensors:

$$\Delta\gamma_{ins} = \gamma_{ins} - \gamma_{ins_{pr}},$$

$$\Delta\gamma_{steer} = \gamma_{steer} - \gamma_{steer_{pr}},$$

where $\Delta\gamma_{ins}$ is the difference between the current value of the angle of rotation relative to the Z axis $\gamma_{ins}$ and the previous value $\gamma_{ins_{pr}}$ according to the readings of the inertial sensor, $\Delta\gamma_{steer}$ is the difference between the current value of the angle of rotation relative to the Z axis $\gamma_{steer}$ and the previous value $\gamma_{steer_{pr}}$ according to the readings of the steering rack encoder.

The value of the total value of the angle of rotation around the vertical Z axis is determined according to the readings of the steering rack encoder and the inertial navigation system as the sum of the values of relative turns $\Delta\gamma_{ins}$ and $\Delta\gamma_{steer}$ taking into account the weighting factor designed to change the degree of influence of these on-board sensors on the assessment of the angle of rotation of the vehicle around the vertical axis:

$$\gamma_k = \Delta\gamma_{steer} * (1 - w_\gamma) + \Delta\gamma_{imu} * w_\gamma,$$

where $\gamma_k$ is the value of the total value of the angle of rotation according to the readings of the steering rack encoder and the inertial navigation system, $w_\gamma$ is a weighting factor designed to change the degree of influence of the readings of the steering rack encoder and the inertial navigation system.

The tincture of a weighting factor characterizing the degree of "confidence" in each on-board sensor - the source of navigation information - is made depending on the specified environmental conditions and the work plan of the AGV (speed change during operation, frequency of change of directions, operating time) in which the AGV operates.

So, in case of loss of a signal from GNSS or its error, which is possible, for example, in tunnels, forests, garages, enclosed spaces, the wheel encoder is the priority on-board sensor for determining speed, while ensuring continuity and stability of the AGV localization process.

In the case of a long-term operation of the AGV, a gyroscope as part of an inertial navigation system may accumulate a sufficiently large error and not provide the required accuracy of measuring the angular position; therefore, the steering rack encoder will have priority in measuring accuracy.

The main factor affecting the measurement accuracy of wheel encoders is the type of road surface, according to which the weight coefficient for this on-board sensor is selected. Weight coefficients $w$, $w_\gamma$ take values

in the range from 0 to 1.

The following borderline cases of values of weight coefficients are possible *w*:

- *w*=0 - the speed value is estimated only according to the readings of the wheel encoders;
- *w*=1 - the speed value is estimated only by GNSS readings;
- *w*=0.5 - the speed value is estimated as the arithmetic mean between the readings of the wheel encoders and GNSS.

Any intermediate values of the coefficient are also acceptable, depending on a certain a priori, for example, as a result of experiments, the accuracy of the sources of -wheel encoders and GNSS.

The following borderline cases of values of weight coefficients are possible *w*$_\gamma$:

- $w_\gamma$=0 - the value of the angle of rotation is estimated only according to the readings of the steering rack encoder;
- $w_\gamma$=1 - the value of the rotation angle of the AGV is estimated only according to the indications of the inertial navigation system;
- $w_\gamma$=0.5 - the value of the angle of rotation is estimated as the arithmetic mean between the readings of the steering rack encoder and the inertial navigation system.

Any intermediate values of the coefficient are also acceptable, $w_\gamma$ depending on a certain a priori, for example, as a result of experiments, the accuracy of the sources of the -steering rack encoder and the inertial navigation system.

To determine the location and heading angle of the AGV, the angle of rotation $\gamma_k$ and $v_k$ speed are combined using a kinematic model of the vehicle, as a result of which the coordinates and course of the vehicle are determined:

$$angle = \gamma_k + \delta,$$

$$x = x_0 + v_k * cos(angle) * \Delta t,$$

$$y = y_0 + v_k * sin(angle) * \Delta t,$$

where *angle* is the heading angle of the vehicle, rad.
$\Delta t$- time elapsed since the previous calculation;
($x_0$,$y_0$) - initial coordinates of the AGV;
(*x*,*y*) - estimation of the AGV coordinates.

Thus, as a result of the implementation of the method of integrating heterogeneous navigation information for positioning a ground vehicle, with the formed set of onboard sensors that are part of the AGV, increased accuracy of the AGV localization in various operating conditions is provided with the reliability and stability of the navigation process and, as a consequence, the safety of the AGV operation.

## Claims

1. A method of integrating navigational data to determine the position of a vehicle obtained from onboard sensors of the vehicle, the positioning of a ground vehicle, **characterized in that** the data on the speed of the vehicle is obtained from the encoders installed on the wheels of the vehicle, and now the receiver, the data about the angle of rotation of the vehicle around the vertical axis is obtained from the encoder mounted on the steering rack of the vehicle, and inertial navigation systems, convert the data received from these on-Board sensors in appropriate units of speed and angle of rotation, determine the speed of the vehicle as the sum of the values of the velocities, obtained on the testimony of wheel encoders and now the receiver considering the weighting factor used to control the degree of influence the testimony of these onboard sensors to estimate the speed of the vehicle, then determine the estimated angle of rotation of the vehicle around the vertical axis by the angle of the steering rack based on the value of the vehicle speed, defined based on the testimony of wheel encoders and now the receiver, determine the relative rotations of the vehicle around the vertical axis according to the testimony of inertial navigation system and encoder steering rack as the difference between the previous and current readings corresponding onboard sensors determine the angle of rotation of the vehicle around the vertical axis as the sum of the values of relative rotations on the testimony of the encoder steering rack and inertial navigation systems, considering the weighting factor used to control the degree of influence the testimony of these onboard sensors to estimate the rotation angle of the vehicle, the data about the angle of rotation of the vehicle around the vertical axis and the speed of the vehicle are combined using a kinematic model of the vehicle, causing define the position and course of a vehicle.

2. The method of integrating navigational data to determine the position of a vehicle according to claim 1, **characterized in that** additionally readings are obtained about the direction of movement of the vehicle from the rotation encoder placed on the shaft of the vehicle engine.

**INTERNATIONAL SEARCH REPORT**

| International application No. |
| --- |
| PCT/RU 2021/000489 |

**A. CLASSIFICATION OF SUBJECT MATTER**

G01C 21/16 (2006.01)   G01C 23/00 (2006.01)   G01S 19/52 (2010.01)

According to International Patent Classification (IPC) or to both national classification and IPC

**B. FIELDS SEARCHED**

Minimum documentation searched (classification system followed by classification symbols)

G01C 21/00-21/20, G01S 15/00, 17/00, 19/00, 19/52, G08G 1/00-1/16

Documentation searched other than minimum documentation to the extent that such documents are included in the fields searched

Electronic data base consulted during the international search (name of data base and, where practicable, search terms used)

PatSearch (RUPTO Internal), USPTO, PAJ, Espacenet, Information Retrieval System of FIPS

**C. DOCUMENTS CONSIDERED TO BE RELEVANT**

| Category* | Citation of document, with indication, where appropriate, of the relevant passages | Relevant to claim No. |
| --- | --- | --- |
| A | RU 2559194 C1 (OTKRYTOE AKTSIONERNOE OBSHCHESTVO "ZAVOD IM. V.A. DEGTYAREVA") 10.08.2015 | 1-2 |
| A | RU 2685767 C1 (SAMSUNG ELEKTRONIKS KO., LTD.) 23.04.2019 | 1-2 |
| A | RU 2634082 C1 (PUBLICHNOE AKTSIONERNOE OBSHCHESTVO "MOSKOVSKIY INSTITUT ELEKTROMEKHANIKI I AVTOMATIKI" (PAO "MIEA") 23.10.2017 | 1-2 |
| A | US 7979172 B2 (INTELLIGENT TECHNOLOGIES INTERNATIONAL, INC) 12.07.2011 | 1-2 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 21 February 2022 (21.02.2022) | 03 March 2022 (03.03.2022) |
| Name and mailing address of the ISA/RU | Authorized officer |
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110567458
- US 2009319186 A
- WO 2019179844 A